# EUROPEAN PATENT APPLICATION

(11) **EP 3 115 906 A1**
(43) Date of publication of application: **11.01.2017**
(21) Application number: 15175597.2
(22) Date of filing: 07.07.2015
(51) Int. Cl.: G06F 17/30

(54) **FINDING DOUBLETS IN A DATABASE**

(71) Applicant: Toedt, Dr. Selk & Coll. GmbH, 80333 München (DE)
(72) Inventor: Mühlich, Christoph, 80637 München (DE)
(74) Representative: Qip Patentanwälte Dr. Kuehn & Partner mbB

(57) **Abstract**

A method for finding doublets (36) in a database (12) comprises calculating hash values for at least two field groups (34) for records (32) in the database (12), wherein a field group (24) comprises at least two fields (30) of the records (32) and the hash value of a field group (34) for a record (32) is based on the values in the at least two fields (30) of the respective field group (34) stored in the respective record (32); storing the calculated hash values for each record (32); and identifying doublets (36) by comparing the stored hash values of two records (32), which were calculated from a field group (34), wherein two records (32) are a doublet (36), when the hash values of at least one field group (34) are equal.

## Description

### FIELD OF THE INVENTION

The invention relates to a method, a computer program, a computer readable medium and a system for finding doublets in a database.

### BACKGROUND OF THE INVENTION

A doublet may be seen as a record in a database, which is present several times, although it should be present only one time. For example, doublets often arise in address databases, since the same person is saved with its address in several records, for example due to misspelling, incomplete information (such as a missing title, middle name, etc.) or transposed digits (for example in a postal code).

More exactly, the records forming a doublet may not be identical, but may relate to the same logical data. In this sense, it has to be understood that the saved data of two records of a doublet may be different. The "correct" record may be based on merging the data of the two or more records in some way.

In large databases, the search for doublets is a challenge, since, in principle, every record has to be compared with every other record. Furthermore, the comparison of two records may be time consuming, since the data may not be compared in view of equality but in view of similarity. Also, when large sets of data are added to an already present database, which already has been cleared from doublets, the addition or merging of the new data may be expensive.

Returning to the example of address data, in big hotel chains about 50 to 60 thousand records of address data are generated every day. If it is intended to collect these data, these records have to be merged into a database, which may already have millions of records. Even by smaller hotels, the database may contain about 200 thousand records, which have to be merged with 200 new records every day.

In general, the problems of doublet search and merge may arise always, when large sets of records belonging to one entity (such as a person, a machine, a device, etc.) are collected in an error-prone way. In particular, this may be the case, when the data is typed in manually (such as address data, profile data or financial data).

WO2014/145088 A1 relates to batching and real-time processing and mentions to create an identifier or unique ID by hashing of name and address of user input data. WO2012/174268 relates to processing of repetitive data and proposes to hash one or more items of data to perform a matching comparison.

US 8,838,549 B2 discloses a method for finding duplicates by matching a group of fields. The matching is based on a matching function generating keys from text fields. US 2007/0005556 A1 relates to probabilistic finding fuzzy duplicates, wherein tuples of data are converted into a hash vector. US 8,832,041 B1 relates to identifying duplicate entries using hash values on field basis.

### DESCRIPTION OF THE INVENTION

It is an object of the invention to speed up the search for doublets in large databases. Furthermore, it is an object of the invention to improve the quality of doublet search.

This object is achieved by the subject matter of the independent claims. Further exemplary embodiments are evident from the dependent claims and the following description.

A first aspect of the invention relates to a method for finding doublets in a database. As defined above, a doublet or duplicate may be two or more records in the database, which refer to the same logical data, such as a specific entity, person, device, machine, etc. These two or more records need not contain the same data, but only similar data, due to, for example, misspellings and/or, missing field data.

The data stored in the database may be and/or may comprise address data, and, in this case, may comprise fields with the name, the postal code, the town, the street, the birth day, the identification card number, etc. However, it is also possible that the data is or further comprises profile data (such as a user account, a user IP address, ...), device data (with a device ID number, a device type, ...) financial data (such as a bank account number).

The data in the database may be organized in database tables comprising a plurality of records being organized in table fields. The database may be a relational database. Furthermore, the method may be performed by the database itself, for example by a SQL program executed by the database. However, it is also possible that the computer program is written in another language and/or executed in another way, for example as native code or in a virtual machine.

According to an embodiment of the invention, the method comprises: (in a first pass) calculating hash values for at least two field groups for records in the database, wherein a field group comprises at least two fields, and the hash value of a field group for a record, which is based on the values in the at least two fields of the respective field group stored in the respective record; storing these hash values for each record; and (in a second pass), identifying doublets by comparing the hash values of two records, which were calculated during the first pass, wherein two records are a doublet, when the hash values of at least one field group are equal.

Summarized, in a first pass, all or some of the data may be transformed to hash values and in a second pass, these hash values may be used for finding doublets.

The hash values are based on field groups, i.e. one hash value is not calculated from a value in a single field but from at least two fields. For example, a first field group may comprise the fields "name", "e-mail" and a second field group may comprise the fields "identification card number" and "country". A field group may be adapted for uniquely identifying the entity (person, device, etc.) represented by the record. The fields may be table fields of a database table.

Furthermore, for finding doublets, two or more of these field groups related to hash values are used for finding doublets. It is assumed that two records are part of a doublet, when at least the hash values of one field group are equal. Only one record is kept from one doublet, when duplicate records are found.

In this, way, the speed of processing the data may be improved, since only view hash values (which are usually based on numbers and/or have a specific length) have to be compared. Furthermore, compared to calculating hash values for single fields, the amount of data to be stored may be reduced.

Additionally, since multiple field groups related hash values are compared, this may improve the quality of the data generated by removing duplicate records. For example, when the name has been misspelled, but the record is identified with the country/ID card field group, no further record relating to the same person is kept.

According to an embodiment of the invention, two field groups have at least one field in common. For example, the field "name" may be part of two field groups. In such a way, the quality of identification may be improved. The hash values of these two field groups may be based partially on the same field value, which, however, is combined with different other fields.

According to an embodiment of the invention, the records are stored in a first table. In general, the database may comprise a raw data table, comprising the new data to be included into the database and a cleansed data table with records already removed from doublets. With this method, the new data has to be included into the cleansed data without generation doublets. To achieve this, the hash values may be stored in a separate (matching) table together with a unique ID for the corresponding record. All the tables, the raw data table, the cleansed data table and the matching table may comprise a unique ID field, uniquely identifying each record. That means a doublet (two duplicate records) may comprise several unique IDs.

A unique ID (identifier) may be a value that is different for every record of a table.

The matching table already may comprise the hash values of the cleansed table and the hash values of the raw data may be added to the matching table during the first pass. When removing duplicate records, also the records in the matching table may be removed.

According to an embodiment of the invention, the hash value of a field group is set to an empty value, when one of the fields of the field group contains an empty value. An empty value may be a NULL value according to SQL. However, it also may be possible that the number 0 or a text of zero lengths are seen as empty values. In such a way it may be avoided to generate hash values having reduced information content.

According to an embodiment of the invention, empty hash values are not compared for identifying doublets. In such a way, records having missing fields do not result in false doublet identification.

According to an embodiment of the invention, the hash values are determined with an MD5 algorithm. In general, a hash value may be a numeric value of specific length (in bytes) that is calculated from the field data with a hash algorithm. For example, the field data may be concatenated as raw data (its byte values) and the hash algorithm may be applied to the raw data, which usually is longer in bytes as the hash value. The hash algorithm usually is chosen such that different raw data input to the hash algorithm results in different hash values as far as possible. A hash algorithm with these properties is MD5, which produces a 128 bit hash value.

According to an embodiment of the invention, the doublets are identified in a cascaded way by: setting a reference value for each record to the unique ID of the record; for each field group, setting the reference value for each record to a reference value of a first record having the same hash value for the field group; and, when all the field groups have been processed, identifying a doublet by assigning records to each other, which have the same reference value. In such a way, also records may be assigned to a doublet (which in this case is identified by the reference value) that is only indirectly linked with each other via the hash values.

According to an embodiment of the invention, the reference value is stored in a table also storing the hash values and the unique ID. The identification of the doublets via the hash value may be performed in one single table, in which a reference value is firstly set to the unique ID and then during several passes for each field group is set to a unique ID of another previous record, when the hash value for the specific group for the two records are equal. When all field groups have been processed, all records with a specific reference value belong to a doublet. For example, the first record with the specific reference value may be used for representing the doublet.

According to an embodiment of the invention, the records are prepared from raw data for the hash value generation. The records may be provided as raw data, which firstly may be prepared for the hash value generation. For example, a further table may be filled with the prepared data and the hash values are calculated based on this further table.

The data preparation may comprise deleting of special characters in a character field. For examples *"*$*"* or *"*&*"* may be deleted from character fields, this these characters usually only contain small information adapted for differentiating between two different field values.

The data preparation also may comprise keeping only a predefined number of chars of a character string for at least one character field. For example, only the first 10 or 20 chars may be kept, since this usually is enough to differentiate between two field values.

The data preparation may comprise replacing a character field with a numeric value representing the pronunciation of the value of the character field. Such an algorithm, such as *"*soundex*"* may allow associating a misspelled word or name with the original one.

According to an embodiment of the invention, the method may further comprise: removing the doublets from the database by only keeping one record per doublet. It also may be possible that the records of a doublet are merged with each other to generate a new record that is then saved in the database.

A further aspect of the invention relates to a computer program for finding doublets in a database table, which, when being executed by a processor, is adapted to carry out the steps of the method as described in the above and in the following. The computer program may be based on SQL directly executed by the database.

A further aspect of the invention relates to a computer-readable medium in which such a computer program is stored. A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer readable medium may also be a data communication network, e.g. the Internet, which allows downloading a program code. In general, the computer-readable medium may be a non-transitory or transitory medium.

A further aspect of the invention relates to a computer system, comprising a relational database comprising at least one database table comprising a plurality of records organized in data fields and such a computer program, wherein the computer program is based on SQL stored in the database. The computer system may be a single server computer, a PC or a virtual machine in a cloud computing facility. The database may be MS SQL Server™, Oracle™, Sybase™, PostgreSQL™ or MySQL™.

It has to be understood that features of the method as described in the above and in the following may be features of the computer program, the computer-readable medium and the *system* as described in the above and in the following, as well as vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a system according to an embodiment of the invention.
Fig. 2 schematically shows tables used in the system of Fig. 1.
Fig. 3 shows a flow diagram illustrating a method according to an embodiment of the invention.
Fig. 4 schematically shows the content of a table during identification of doublets in the method of Fig. 3.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

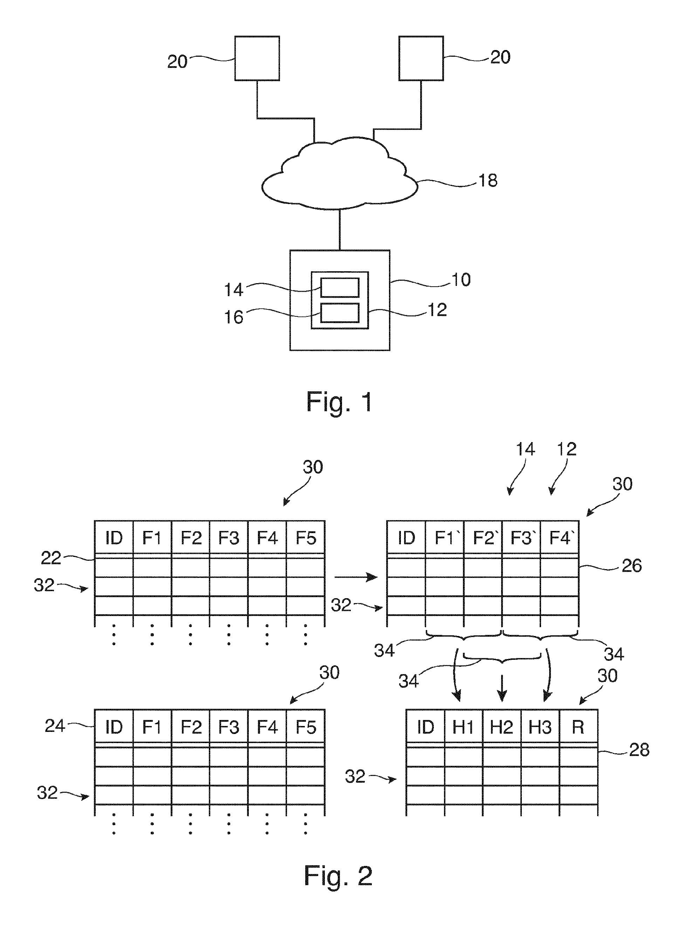

Fig. 1 shows a system 10 comprising a database 12, which comprises data tables 14 (for example with address data or other data as described above) and a computer program 16, which is adapted for finding and removing doublets in the data tables 14. For example, the system 10 is a database server running in dedicated hardware or may be provided by a cloud computing facility as virtual machine.

The system may be connected via the Internet 18 with further remote systems 20, which provide the system 10 regularly with new raw data, such as data records with address data collected by a hotel chain in different hotels, when guests of the hotels are checking in and out. The database 12 may contain millions of records, whereas the remote systems 20 may provide several 10.000 of new records per day.

Fig. 2 shows a part of the database 12, namely a raw data table 22, a cleansed data table 24, a prepared data table 26 and a matching table 28. The database 12 may be a relational database and every table 22, 24, 26, 28 may comprise specific table fields 30. Every record 32 of each table has values for the specific table fields 30 of the corresponding table.

All the tables 22, 24, 26, 28 comprise a data field ID with a unique ID, which is unique for each record in the raw data table and the cleansed data table and/or with which the records in the tables 26, 28 may be associated with the records in the tables 22, 24 and with each other.

For example, the raw data table 22 may be filled with records of raw data received from the systems 20 and every new record may be provided with a unique ID that is higher than the highest already assigned unique ID.

The cleansed data table 24 may have the same fields 30 as the raw data table 22. A record 32 in the raw data table may be identified as new record (without a doublet),and it may be moved to the cleansed data table 24. Otherwise, when a record 32 in the table 22 is identified as duplicate record (i.e. a member of a doublet) it may be discarded and the corresponding record 32 in the table 24 may be kept or, alternatively, the record 32 in table 24 may be replaced with the record 32 of table 22.

For example, the tables 22 and 24 may comprise the fields 30: last name, first name, title, date of birth, place of residence, street, house number, country, identification card number, e-mail.

The prepared data table 26 is filled with data based on the records 32 of the raw data table 22. The prepared data table 26 may comprise different fields 30, which are filled from fields 30 of the raw data table. There may be a 1:1 correspondence between fields 30 of these two tables 22, 26, wherein, for example, a character field of the raw data table corresponds to a shorter character field of the prepared data table.

For example, the tables 26 may comprise the fields 30: last name, first name, title, date of birth, place of residence, street, house number, country, identification card number, e-mail. However, the format and/or length of the fields of the table 26 may differ from the tables 22 and/or 25.

The matching table comprises (besides the unique ID field), hash fields H1, H2, H3 for hash values of different field groups 34 and a reference value field R that is used for association records 32 of a doublet with each other.

Examples for field groups 34 are:
- name (only last name, last name and first name), date of Birth, city of residence;
- name, e-mail;
- identification card number, country;
- date of birth, street, city of residence.

Every hash value for a hash field in a record 32 has been calculated from the corresponding record 32 in the prepared data table 26 with the same unique ID. The records in the matching table 28 may either correspond the new data records in the raw data table 22 or to (already processed) records 32 in the cleansed data table 24.

When a record 32 in the table 22 or 24 is deleted also the corresponding record 32 in the matching table 32 should be deleted. When a record 32 is moved form table 22 to table 24, the corresponding record 32 in the matching table 28 should be kept.

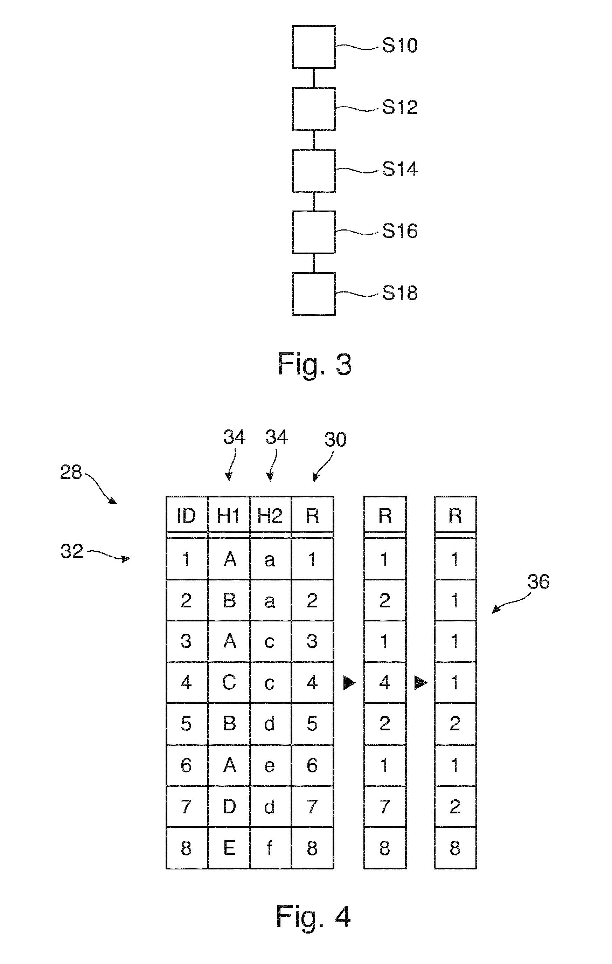

Fig. 3 shows a flow diagram for a method for finding doublets in 12 in the database 12, which may be at least partially performed by a SQL program 16 stored in the database 12.

In step S10, the raw data table 22 is emptied and the new data, for example from the systems 20, is written into the raw data table 22 and corrected.

For example, the data correction, which takes place in every record 32, may comprise moving specific pieces of fields to other fields. For example, a title such as "Dr." is moved from a name field into the title field. Also a house number may be moved from a street field into a dedicated number field.

Furthermore, in every character field, every kind of blank character may be substituted by a simple space character.

Also, special characters may be substituted by dedicated characters (such as *"*&*"* into *"*and*"*)

It also may be possible that specific fields are checked against another database. For example, it may be tested, whether a ZIP code and a town match to each other. Also, it may be tested, whether the given street and house number exists in the given town.

In step S12, the prepared data table 26 is emptied and filled with data prepared from the corrected raw data table 22.

The data preparation may be performed for every record 32 in table 22 and usually comprises a preparation of character fields, such that this may be better prepared for hashing.

For example, special characters and accents may be removed from character fields 30 (such as *"*$*"* into *""* and/or *"*ê*"* into *"*e*"*).

Umlauts may be transformed into double characters (such as *"*ä*"* into *"*ae*"*).

Only the first characters (such as the first 20 characters) of the street name are kept. Also, the house number may be removed from the street field.

For special character fields a specific (numeric) value may be calculated from the character string, which is stored in a, for example, numeric field in the prepared data table. For example, the *"*soundex*"*-algorithm may be applied to special fields, which results in the same numerical value for similar sounding names/words (*"*Meier*"*=*"*Meir*"*=*"*Mair*"*).

Also, empty values (such as an empty string) may be replaced with NULL values.

In step S14, the hash values in matching table 28 are calculated. For every record 32 in table 26, a new record 32 with hash values is created in table 26. The matching table already may comprise the hash values of the records 32 of table 24. The hash values are calculated for groups/combinations 34 of fields 30 of the table 26 (and thus the table 22). For example, for a field group 34, the field values of the specific record 32 in table 26 are concatenated and a hash algorithm is applied to the concatenated value. For example, the *"*MD5*"* hash value algorithm may be used. The result value, which usually is a numeric value of a specific length, is stored in the corresponding hash value field in table 36.

It may be possible that different hash algorithms are used for different fields.

It has to be noted that, if one of the field values of a group 34 is NULL (or empty), the corresponding hash value will be set to NULL (or to a 0).

The steps S10 to S14 may be seen as a first pass of the method, in which the hash values are generated and stored. The following steps S16 and S18 may be seen as a second pass, in which the hash values are used for determining and removing doublets.

In step S16, record matching is performed. This will be explained with reference to Fig. 4. Fig. 4 shows the filled matching table 28 with two different hash value fields H1 and H2, which values are indicated symbols as letters.

In a first sub-step, the reference value field of every record 32 is filled with the unique ID from the unique ID field.

After that, the records 32 are matched in a cascaded way. For every group hash value field the reference value is replaced with the reference value of a previous record, when the corresponding hash values are equal. For example, in the first pass for the hash value H1, in records *"*3*"*, the reference value 3 is replaced with *"*1*"*, because both records *"*1*"* and *"*3*"* have the same hash value *"*A*"*. In the second pass, the reference value of record *"*4*"* is set to *"*1*"*, since the hash value fields H2 have the same value *"*c*"*.

After all field groups 34 have been processed, the reference value R indicates doublets 36, when it is present in more than one record 32.

In the example of Fig. 4, there are two doublets relating to the reference values *"*1*"* (the records with the unique IDs *"*1*"*-*"*4*"* and *"*6*"*) and to the reference value *"*2*"* (the records with the unique IDs *"*5*"* and *"*7*"*). Furthermore, there is a unique record *"*8*"*.

Returning to Fig. 3, in step S18, the doublets are removed and the new records 22 from raw data table 22 are included into cleansed table 24.

For example, when a doublet 36 already has a record in table 24, the records 32 in tables 22, 26 and/or table 28 may be discarded. When a doublet 36 does not have a record in table 24, this record may be included into table 24 by copying the respective record from table 22 into table 24. Furthermore, when a record 32 without doublet is not present in cleansed table 24, it may be copied from table 22 to table 24.

In the end, the cleansed table 24 contains all old and new records 32 without doublets 36.

While the invention has been illustrated and described in detail in the drawings and foregoing description, such illustration and description are to be considered illustrative or exemplary and not restrictive; the invention is not limited to the disclosed embodiments. Other variations of the disclosed embodiments can be understood and effected by those skilled in the art and practicing the claimed invention, from a study of the drawings, the disclosure, and the appended claims. In the claims, the word *"*comprising*"* does not exclude other elements or steps, and the indefinite article *"*a*"* or *"*an*"* does not exclude a plurality. A single processor or controller or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: system
- 12: database
- 14: tables
- 16: SQL program
- 18: internet
- 20: other systems
- 22: raw data table
- 24: cleansed data table
- 26: prepared data table
- 28: matching table
- 30: field
- 32: record
- 34: field group
- ID: unique ID field
- F1, F2, F3, F4, F5: field of tables 22, 24
- F1', F2', F3', F4': field of table 26
- H1, H2, H3: hash value field
- R: reference value field
- 36: doublet

## Claims

1. A method for finding doublets (36) in a database (12), the method comprising:
calculating hash values for at least two field groups (34) for records (32) in the database (12), wherein a field group (24) comprises at least two fields (30) of the records (32) and the hash value of a field group (34) for a record (32) is based on the values in the at least two fields (30) of the respective field group (34) stored in the respective record (32);
storing the calculated hash values for each record (32);
identifying doublets (36) by comparing the stored hash values of two records (32), which were calculated from a field group (34), wherein two records (32) are a doublet (36), when the hash values of at least one field group (34) are equal.

2. The method of claim 1,
wherein two field groups (34) have at least one field in common.

3. The method of claim 1 or 2,
wherein the records (32) are stored in a first table (22, 24); and
wherein the hash values are stored in a separate table (28) together with a unique ID for the corresponding record (32).

4. The method of one of the preceding claims,
wherein the hash value of a field group (34) for a record (32) is set to an empty value, when one of the fields (30) of the field group (34) contains an empty value in the record (32).

5. The method of claim 4,
wherein empty hash values are not compared for identifying doublets.

6. The method of one of the preceding claims,
wherein the hash values are determined with a MD5 algorithm.

7. The method of one of the preceding claims,
wherein the doublets are identified in a cascaded way by:
setting a reference value (R) for each record to the unique ID of the record (32);
for each field group (34), setting the reference value for each record (32) to a reference value of a first record having the same hash value for the respective field group (34);
when all the field groups (34) have been processed, identifying a doublet (36) by assigning records (32) to each other, which have the same reference value.

8. The method of claim 7,
wherein the reference value is stored in a table (28) also storing the hash values and the unique ID.

9. The method of one of the preceding claims,
wherein the database (12) comprises address data.

10. The method of one of the preceding claims,
wherein the records (32) are prepared from raw data (22) for the hash value generation and this data preparation comprises at least one of:
deleting of special characters in a character field;
keeping only a predefined number of chars of a character string for at least one character field;
replacing a character field with a numeric value representing the pronunciation of the value of the character field.

11. The method of one of the preceding claims, further comprising:
removing the doublets (36) from the database (12) by only keeping one record (32) per doublet (36)

12. A computer program (16) for finding doublets in a database which, when being executed by a processor, is adapted to carry out the steps of the method of one of the preceding claims.

13. A computer-readable medium, in which a computer program according to claim 12 is stored.

14. A computer system (10), comprising:
a relational database (12);
a computer program (16) according to claim 12,
wherein the computer program is based on SQL stored in the database (12).
